# DEMANDE DE BREVET EUROPEEN

(11) **EP 2 101 293 A1**
(43) Date de publication de la demande: **16.09.2009**
(21) Numéro de dépôt: 09154965.9
(22) Date de dépôt: 12.03.2009
(51) Int. Cl.: G06Q 10/00

(54) **Système de suivi d'au moins un dispositif destiné à être transporté**

(30) Priorité: 14.03.2008 FR 0851678
(71) Demandeur: Saint-Gobain Glass France, 92400 Courbevoie (FR)
(72) Inventeur: Portais, Jacques, 60150 Thourotte (FR); Rebotie, Jacques, 60750 Choisy-au-bas (FR)
(74) Mandataire: Lucas, Francois

(57) **Abrégé**

L'invention se rapporte à un système de suivi d'au moins un dispositif dont on souhaite connaître les conditions de transport. Le système de suivi comprend des moyens de traitement, d'enregistrement et de communication de données (5) qui comportent un émetteur-récepteur de données (51), un module de traitement et d'enregistrement des données (52) et un module d'acquisition de données de localisation (53), des moyens électroniques de lecture/écriture (3, 30) qui sont associés au dispositif (1, 10) et qui communiquent avec les moyens de traitement, d'enregistrement et de communication (5). Des capteurs (4) sont associés au système de suivi et génèrent des données évènementielles liées aux conditions de transport et localisées par le module d'acquisition de données de localisation (53), ces données étant communiquées aux moyens de traitement, d'enregistrement et de communication (5).

## Description

L'invention se rapporte au suivi de dispositifs qui sont transportés par un moyen de locomotion d'un endroit à un autre, les dispositifs étant en particulier des marchandises, et/ou des supports et/ou contenants servant à porter et/ou convoyer des marchandises.

Sans y être limitée, l'invention sera plus particulièrement décrite par rapport au transport de verre. II s'agit par exemple de convoyer des panneaux verriers grâce à des agrès servant de supports tels que des chevalets. Les panneaux verriers, tout comme les agrès, constituent des dispositifs que l'on souhaite suivre tout au long de leur exploitation, notamment lors des phases de transport jusqu'à l'étape de livraison.

Expliquons brièvement, le transport actuel du verre. Une usine de fabrication de verre est dotée d'un float qui délivre un ruban continu de verre plat ; ce ruban est découpé sous forme de grands panneaux verriers. Les panneaux verriers sont livrés sur des sites de transformation où ils sont découpés à de plus petites dimensions et/ou sont transformés en des produits finaux dont la destination est très variée, par exemple pour l'automobile et le bâtiment.

Les produits finaux constituant toujours des éléments verriers sont enfin conduits jusqu'à des clients pour leur application finale.

Que ce soit de petite ou de grande taille, les éléments verriers doivent donc être précautionneusement transportés pour arriver sans dommage à destination, aussi bien par mode routier, ferroviaire, aérien, fluvial ou maritime ou encore selon une combinaison de ces modes. Cet acheminement se fait grâce à des dispositifs spécialement conçus qui sont constitués par des agrès dotés de moyens de support et de calage adaptés. Enfin, les moyens de transport que sont les camions pour la route, nommés couramment « Inloader », et les wagons pour le rail, sont agencés dans leur intérieur spécifiquement pour recevoir lesdits agrès.

Généralement, la livraison des panneaux verriers est effectuée sur site en déchargeant également les agrès. Ces derniers peuvent tout aussi bien après récupération des panneaux verriers être rapatriés par le même engin de locomotion, ou être laissés sur place et récupérés ultérieurement par un autre moyen de locomotion pour revenir à leur point de départ, ou pour être dirigés vers une autre destination.

Actuellement, l'entreprise, que ce soit le fabricant de verre ou un sous-traitant, qui est responsable de la livraison des éléments verriers dispose d'un parc de quelques centaines, voire milliers, d'agrès qui sont acheminés de sites en sites sans revenir forcément dès le premier transport à leur point de départ. L'entreprise ne maîtrise aucunement le suivi de ses agrès, et ne connaît pas à une date donnée leur localisation. II arrive ainsi qu'au fil des années, certains agrès soient même perdus.

Or de tels dispositifs conçus spécifiquement, en l'occurrence ici pour le transport de panneaux verriers, sont onéreux à l'achat, et représentent pour l'ensemble d'un parc, un investissement non négligeable dans la logistique de transport élaborée par l'entreprise. Régulièrement, l'entreprise ne connaissant pas la localisation de ses chevalets et se trouvant même parfois en défaut numéraire pour assurer les livraisons se trouve dans l'obligation d'acheter de nouveaux dispositifs.

On peut remédier à ce problème de traçabilité des dispositifs par un système électronique de suivi de tels dispositifs.

On connaît à ce sujet de la demande de brevet FR 2 836 262 un système de suivi d'objets qui servent en particulier à la livraison de verre transformé.

Le système divulgué dans ce document est conçu en dotant chaque objet, d'une étiquette électronique de lecture/écriture, de préférence sans contact, qui est apte à enregistrer à partir d'une source extérieure, des données liées à l'objet et à transmettre des données vers un lecteur approprié.

Ce système comporte également des moyens de détection qui sont aptes à communiquer avec l'étiquette électronique agencée sur l'objet, et qui détectent ainsi le déchargement ou le chargement de l'objet lorsque celui-ci passe à proximité des moyens de détection. Des moyens d'enregistrement sont couplés aux moyens de détection pour enregistrer les données associées au chargement et au déchargement de l'objet. Il est également avantageux de relier les moyens d'enregistrement à un dispositif GPS pour localiser le lieu de chargement et de déchargement de l'objet.

Un tel système permet effectivement de connaître à tout moment l'inventaire des objets, tels que des chevalets de support de verre, et leur localisation.

On peut à partir de ce système savoir également si la livraison du produit a bien été effectuée au client.

Cependant, bien que les chevalets de transport du verre soient adaptés pour protéger au mieux les éléments verriers, il n'empêche qu'au cours du transport certains aléas peuvent conduire à l'altération desdits éléments verriers. Une fois sur place, la livraison ne peut être faite si l'élément est trop altéré, voire détérioré. On s'en tient par le système de suivi décrit ci-dessus à identifier quel chevalet ne sera pas livré et reviendra à destination. Mais on ne peut en aucun cas identifier la raison de l'altération et à quel moment elle s'est produite.

En outre, l'optimisation de la logistique dans une entreprise consiste aussi à vouloir et pouvoir anticiper les dysfonctionnements éventuels au cours du transport, et des opérations de préparation au transport, de manière à réagir en temps réel et prévenir et/ou organiser différemment la suite du transport, de la livraison, ou toute autre étape définie dans la logistique.

Aussi l'invention propose-t-elle d'utiliser un système de suivi de dispositifs destinés à être transportés, qui fournisse une traçabilité et une gestion desdits dispositifs, tout en mettant en oeuvre un système de traçabilité sur les conditions de transport desdits dispositifs.

Cette traçabilité est souhaitable sur tous chemins de transport, que ce soit entre des sites de production et/ou des sites intermédiaires de logistique et/ou des sites de livraison, y compris jusqu'au client final.

Selon l'invention, le système de suivi d'au moins un dispositif destiné à être transporté, comprend des moyens de traitement, d'enregistrement et de communication de données qui comportent un émetteur-récepteur de données, un module de traitement et d'enregistrement des données et un module d'acquisition de données de localisation du type GPS, des moyens électroniques de lecture/écriture qui sont destinés à être associés au dispositif et qui sont aptes à communiquer avec les moyens de traitement, d'enregistrement et de communication, et il comporte au moins un capteur pour la mesure et/ou la détection de données évènementielles liées aux conditions de transport, le ou les capteurs étant aptes à communiquer les données évènementielles aux moyens de traitement, d'enregistrement et de communication, et éventuellement au moyens électroniques de lecture/écriture, la transmission des données évènementielles aux moyens de traitement, d'enregistrement et de communication étant associée à une adresse de localisation de l'événement grâce au module de localisation.

Le dispositif à transporter est en particulier :
- un produit verrier, tel qu'un substrat verrier ;
- un support de produit verrier, tel qu'un agrès de support de verre, ou une interface pour le montage d'un substrat verrier sur un agrès de transport ; ou
- un contenant de produit verrier, tel qu'un container ou un caisson apte à être mobile, vide ou chargé, qui est destiné à intégrer des agrès de support de verre.

On entend par dispositif, tous types de dispositifs à transporter, que ce soit une marchandise, un contenant ou un élément de support pour marchandises. Par exemple, dans le cas du transport de verre, le dispositif peut être un panneau verrier, un agrès qui supporte un ou des panneaux verriers, un contenant tel qu'une caisse mobile, un container dans lequel sont rangés une pluralité d'agrès.

On entend selon l'invention par « conditions de transport », également les conditions de manutention, notamment en amont des opérations de chargement.

Le système de l'invention assure ainsi de connaître les conditions de transport et de manutention des dispositifs transportés, ce qui permet d'optimiser davantage la logistique et d'offrir des garanties notamment quant à des cahiers des charges relatifs aux conditions de transport, à la qualité des dispositifs livrés, en particulier lorsqu'il s'agit de marchandises qui risquent d'être dégradées.

Sans être exhaustif, on peut citer les avantages suivants procurés par l'invention.

II est possible de choisir le mode de transport et/ou le chemin emprunté les plus appropriés en fonction de critères prédéfinis et prioritaires. Par exemple, on pourra comprendre pourquoi des marchandises telles que des panneaux verriers sont systématiquement détériorés à l'arrivée du transport ; l'analyse des données fournies par le ou les capteurs et associées à une adresse de localisation rendra compte d'un défaut systématique à un endroit donné du chemin emprunté (mauvais état de la route par exemple), et on modifiera alors le tracé du chemin emprunté pour le transport afin d'éviter une dégradation systématique des marchandises.

Connaître la qualité du transport peut être par ailleurs utile en vue de la garantie ultérieure à assurer aux marchandises dans leur destination finale.

On peut également s'assurer que les conditions de transport ont répondu à certains critères définis dans un cahier des charges relatif au type de marchandises transportées.

On peut anticiper la suite d'un transport en réagissant par rapport aux données évènementielles, notamment les défauts, qui sont fournies en temps réel, par exemple lors d'un choc plus ou moins violent.

Selon une caractéristique de l'invention, le système de suivi comporte en outre une centrale de gestion des données qui est éloignée physiquement des moyens de traitement, d'enregistrement et de communication de données et qui communique avec ceux-là par des moyens de télécommunication, certaines données de la centrale pouvant être accessibles par Internet. Cette centrale est par exemple basée au centre opérationnel de logistique de l'entité responsable du transport. Ainsi, à distance et en temps réel, le centre opérationnel de logistique connaît dans quelles conditions s'effectue le transport.

Selon une autre caractéristique, les moyens de traitement, d'enregistrement et de communication de données sont associés à l'engin de locomotion destiné à transporter le dispositif, ou bien sont associés au dispositif lui-même à transporter. Par conséquent, on peut connaître à tout moment la localisation de l'engin de locomotion, et la localisation du dispositif. On pourra à partir de cette localisation, détecter et quantifier par exemple un retard prévisionnel de livraison, en fonction aussi d'autres critères que sont notamment, pour un transport par mode routier, le kilométrage restant à parcourir, le réseau routier emprunté, les temps de repos du chauffeur...

L'invention permet donc de répondre également au besoin d'anticipation de dysfonctionnements logistiques éventuels afin de disposer d'un système de pilotage réactif et d'une base de données décisionnelle.

Avantageusement, un ou plusieurs capteurs sont associés au dispositif à transporter et/ou à l'engin de locomotion destiné à transporter ledit dispositif.

On peut citer comme exemple de capteurs, des capteurs qui détectent et/ou mesurent les chocs, les angles pour connaître le tangage et le roulis, la température, l'hygrométrie, la pression, le débit, la masse, la présence. Sont en fait intégrés à l'invention, tous types de capteurs qui permettent de détecter, mesurer tous types de données souhaitées pour rendre compte d'un événement se produisant durant le transport, que l'engin de locomotion soit à l'arrêt ou non, l'événement n'étant pas nécessairement associé à un dysfonctionnement ou à un défaut, mais pouvant correspondre à une simple information de renseignement.

Le ou les capteurs sont adaptés à communiquer des données évènementielles aux moyens de traitement, d'enregistrement et de communication sur requête de ces dits moyens, et de préférence, à générer directement ces données lors de la détection de défauts.

On entend par défauts, des événements qui sont détectés par les capteurs lorsque les valeurs ne sont pas conformes à une valeur critique de seuil prédéfinie.

Des capteurs sont par exemple un capteur de température et un capteur d'humidité, les moyens de traitement, d'enregistrement et de communication étant adaptés à comparer les couples de données de température et d'humidité mesurées par les capteurs de température et d'humidité avec des conditions de température et d'humidité correspondant à la formation du point de rosée et à émettre une alerte lorsque les données de température et d'humidité mesurées sont proches des conditions de température et d'humidité correspondant à la formation du point de rosée.

Un capteur est par exemple un capteur de chocs, les moyens de traitement, d'enregistrement et de communication étant adaptés à comparer les données de chocs mesurées par le capteur de chocs avec une valeur prédéterminée correspondant à la casse du dispositif ou du produit transporté sur le dispositif et à émettre une alerte lorsque les données de chocs sont proches de la valeur prédéterminée.

Les capteurs peuvent également communiquer avec les moyens de lecture/écriture associés au dispositif.

De préférence, les capteurs disposent d'une mémoire interne pour enregistrer les données évènementielles.

Pareillement, les moyens électroniques de lecture/écriture qui sont associés au dispositif peuvent avoir en mémoire les données évènementielles des conditions de transport, mais comprennent aussi avantageusement des données qui caractérisent le dispositif et/ou la commande de livraison dudit dispositif.

De manière générale, toutes les communications entre les éléments du système de suivi (centrale de gestion, moyens de traitement, d'enregistrement et de communication, moyens électroniques de lecture/écriture, capteurs) se font sur requête, ou sur la base d'un envoi immédiat sans requête en cas d'une détection de défaut.

La communication entre les différents éléments du système que sont les capteurs, les moyens électroniques de lecture/écriture, les moyens de traitement, d'enregistrement et de communication, est réalisée par tous moyens de communication adaptés, de préférence par radiofréquences.

Les moyens de traitement, d'enregistrement et de communication nécessitant une alimentation électrique sont alimentés par une source d'alimentation électrique autonome ou non.

La source d'alimentation électrique fonctionne à partir de tous types de générateurs associés à l'engin de locomotion, par exemple un générateur électrique, éolien, électromagnétique, thermique, solaire. De préférence, la source d'alimentation fonctionne à partir de la batterie de l'engin de locomotion lorsque celui-ci est un véhicule routier. En variante, la source d'alimentation fonctionne à partir de cellules photovoltaïques disposées sur l'engin de locomotion, en particulier lorsque celui-ci est un wagon ferroviaire.

Au cas où la source d'alimentation viendrait à défaillir, les moyens de traitement, d'enregistrement et de communication comportent avantageusement une mémoire non volatile du type Flash pour la sauvegarde des données de manière à ne pas perdre ces données.

Ce système de suivi peut être appliqué à une pluralité de dispositifs qui sont à transporter ensemble, chaque dispositif pouvant comprendre des moyens électroniques de lecture/écriture.

Bien entendu le système de l'invention peut être utilisé dans tous modes de locomotion, routier, ferroviaire, maritime, fluvial, aérien, ou encore selon une combinaison d'au moins deux de ces modes de transport.

L'invention a également trait à l'utilisation d'un système de suivi par localisation par satellite pour le transport du verre, caractérisée en que des capteurs sont associés au système de suivi et sont aptes à générer des données évènementielles liées aux conditions de transport et localisées par ledit système de suivi.

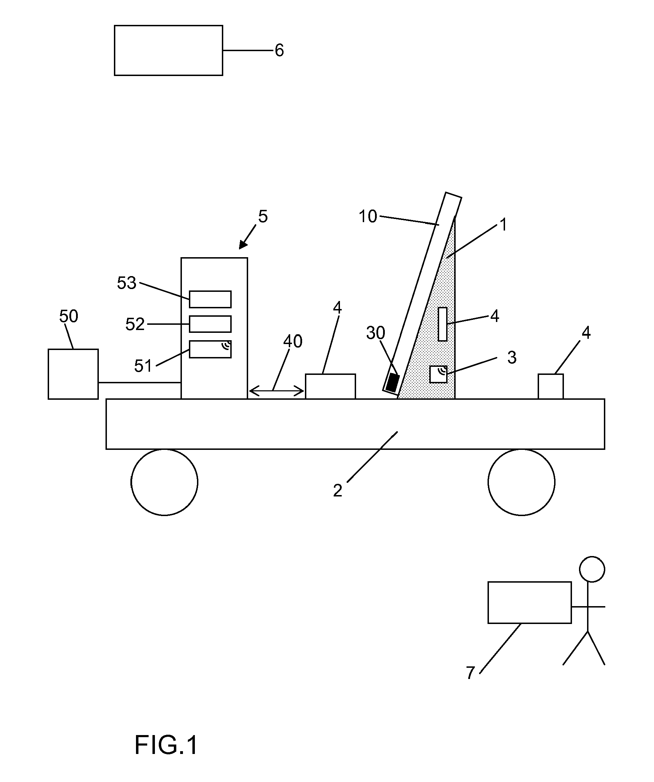

D'autres avantages et caractéristiques de l'invention vont à présent être décrits plus en détail en regard du dessin annexé sur lequel la figure 1 illustre une vue schématique en coupe d'un système de suivi selon l'invention d'au moins un dispositif à transporter, ici décrit par rapport à du transport de verre.

La figure n'est pas à l'échelle pour en faciliter la lecture.

Sur la figure 1 sont illustrés des dispositifs que l'on souhaite transporter, en particulier au moins un agrès 1 du type chevalet et au moins un panneau verrier 10, le chevalet supportant le panneau verrier.

Les dispositifs 1 et 10 sont destinés à être transportés par un engin de locomotion 2 qui peut par exemple être un véhicule routier, un wagon, un bateau, un avion.

Le système de suivi de l'invention comporte divers éléments pour assurer la traçabilité du dispositif 1 et/ou du dispositif 10, durant leur transport et pour connaître les conditions de leur transport.

A cet effet, le système de suivi comporte des moyens électroniques de lecture/écriture 3 qui sont au moins associés au dispositif 1 à transporter, au moins un capteur 4 et des moyens de traitement, d'enregistrement de données et de communication 5 incorporant un module de localisation 53 du type GPS.

Rien n'empêche par ailleurs que l'autre dispositif 10, le panneau verrier, comporte lui aussi des moyens électroniques de lecture et/ou écriture 30.

Le dispositif 1 est destiné à être chargé sur l'engin 2, transporté puis déchargé ou non. Il en est de même pour l'autre dispositif ou panneau verrier 10 qui est supporté par le premier dispositif 1, le chevalet.

Le ou les capteurs 4 sont associés au dispositif à transporter et/ou à l'engin de locomotion 2 destiné à transporter ledit dispositif.

Les moyens de traitement, d'enregistrement des données et de communication 5 sont agencés dans l'engin 2 ou sont associés au dispositif à transporter. Par exemple, dans le cas d'un transport de chevalets par « Inloader » qui constitue l'engin de locomotion 2, les moyens 5 sont disposés à l'intérieur de l'engin.

Dans une variante où les chevalets sont rangés dans une caisse, du type container, qui est adaptée à être déplacée par bateau, rail et route, cette caisse constitue en premier lieu le dispositif à transporter et à suivre par le système de l'invention. Aussi dispose-t-on les moyens de traitement, d'enregistrement des données et de communication 5 dans le dispositif 1, c'est-à-dire dans la caisse.

Toutes les informations passant par les moyens de traitement, d'enregistrement et de communication 5 sont destinées à être communiquées ou à provenir d'une centrale de gestion des données 6 qui est extérieure à l'engin de locomotion. Cette centrale est en particulier localisée dans un site opérationnel de logistique.

La centrale 6 et les moyens de traitement, d'enregistrement et de communication 5 étant éloignés l'un de l'autre, jusqu'à plusieurs centaines, voire milliers, de kilomètres, communiquent entre eux par tous moyens de télécommunications connus.

La centrale 6 est au moins informée dès la détection d'un défaut, et collecte des informations selon un protocole qui est défini par l'entité responsable de la logistique. La centrale peut comprendre un site internet sur lequel sont accessibles en ligne certaines informations liées au transport.

Les moyens électroniques de lecture/écriture 3, 30 sont par exemple une étiquette électronique sans contact du type RFID qui incorpore une antenne et une puce électronique à mémoire active pour inscrire des informations.

Sur cette étiquette électronique, sont inscrites toutes les informations relatives au(x) dispositif(s) qui sont, sa carte d'identité et/ou d'autres caractéristiques, et préférentiellement toutes données liées à son transport.

Quant au chevalet 1, la carte d'identité se caractérise par exemple par l'entreprise à qui il appartient, son numéro d'identification, sa première date d'utilisation, la date de suivi de maintenance ...

Son étiquette électronique 3 peut également intégrer des informations relatives à l'élément 10, le panneau verrier, que supporte le chevalet, par exemple le type de verre transporté, son adresse de livraison, ...

Les données liées au transport et à la commande de livraison seront davantage exemplifiées dans la suite de la description. II s'agit de données prévisionnelles de transport, de données qui sont établies par le(s) capteur(s) 4 et qui sont donc utiles à la compréhension des conditions de transport du ou des dispositifs.

Avantageusement, les étiquettes électroniques 3 et 30 peuvent communiquer ensemble, par exemple pour s'assurer que le panneau verrier 10 est bien celui que le chevalet 1 est destiné à supporter selon la commande de livraison préétablie.

L'étiquette électronique 3, 30 est adaptée à communiquer avec les moyens de traitement, d'enregistrement, et de communication de données 5 et avec tout appareil d'émission-réception compatible 7 qui est indépendant de l'engin de locomotion.

L'appareil 7 est par exemple agencé dans le site depuis lequel part le dispositif à transporter et/ou celui où il est livré, afin de pouvoir lire et/ou écrire des informations associées à l'étiquette électronique pour des besoins spécifiques au site.

L'appareil 7 peut également être un appareil portatif qu'un individu peut utiliser pour venir lire et/ou inscrire des informations sur l'étiquette électronique. Il s'agit par exemple sur l'étiquette 30 des informations liées à la commande du panneau verrier, et sur l'étiquette 3 du suivi de la maintenance du chevalet.

Le ou les capteurs 4 rendent compte des conditions de transport et/ou d'entreposage. Ils mesurent et/ou détectent toutes données que l'on souhaite connaître durant le transport car pouvant par exemple, influencer sur la prise de décisions quant à la logistique du transport, agir sur la viabilité de l'élément 10 à livrer...

Les données établies sont communiquées aux moyens de traitement, d'enregistrement et de communication des données 5, et éventuellement à ou aux étiquettes électroniques 3, 30.

Les capteurs 4 sont en particulier, sans être limitatifs, des détecteurs de chocs, des capteurs pour mesurer le tangage, le roulis, la température, l'hygrométrie, la pression, le débit, la masse, la position, la présence...

Les capteurs délivrent des données périodiquement et/ou en réponse à une requête, et/ou en réponse à un dépassement d'une valeur critique qui peut notamment générer une alerte (défaut).

Le paramétrage des capteurs 4, par exemple mémoriser une valeur critique de seuil, remettre à zéro les mémoires, est réalisé à l'aide des moyens de traitement, d'enregistrement et de communication des informations 5, à partir d'ordres donnés par la centrale 6, éventuellement à l'aide d'un appareil d'émission-réception compatible 7 ou encore à l'aide d'un ordinateur qu'on vient ponctuellement mettre en communication avec les capteurs.

Concernant la détection de chocs, ils sont avantageusement établis selon les trois directions de l'espace. Les chocs sont détectés par exemple par comparaison avec une valeur seuil qui peut être propre au mode de transport utilisé (fer, mer, fluvial, aérien, route, combinaison des modes). La valeur seuil est de préférence liée au type de dispositif transporté, ici selon les chocs susceptibles d'endommager le verre correspondant au dispositif 10.

Ainsi, les moyens de traitement, d'enregistrement et de communication 5 sont adaptés à comparer les données de chocs mesurées par le capteur de chocs avec une valeur prédéterminée (la valeur seuil). Cette valeur seuil correspond à la casse du dispositif 1 ou du produit 10 transporté sur le dispositif 1, à savoir la casse du panneau verrier dans le cas de transport de verre.

Le capteur de chocs mesure par exemple l'accélération dans trois directions perpendiculaires entre elles.

Les moyens de traitement, d'enregistrement et de communication 5 peuvent par exemple émettre une alerte lorsque les données mesurées par le capteur de chocs sont proches de la valeur seuil (par exemple à 10% de la valeur seuil). Ainsi, en cas de chocs dont la valeur est inférieure à une valeur seuil, mais proche de celle-ci, la casse de la marchandise peut être évitée si le chauffeur adapte sa conduite pour éviter un choc plus violent. De même, lorsqu'un choc violent, dont la valeur est supérieure à la valeur seuil, est détecté pendant le transport, il peut être décidé que le chemin utilisé pour ce transport sera désormais banni et qu'un autre trajet devra être emprunté lors d'un futur transport de ce type de marchandise. Cela permet d'éviter la répétition de la casse.

Lorsque la valeur mesurée dépasse la valeur seuil, tel qu'en cas de coc violent, la centrale 6 peut commander à son chauffeur de vérifier l'état de la marchandise et, en cas de casse, d'aviser de la suite à donner au transport. Cela permet de gagner du temps en évitant que la marchandise détériorée fasse tout le trajet avant que l'on se rende compte qu'elle est détériorée. Elle peut ainsi être déchargée plus tôt.

Des mesures de températures et d'humidité permettent d'identifier l'atteinte du point de rosée pour le dispositif à transporter tel que le panneau verrier. Lorsque le produit à transporter est du verre, il est particulièrement ennuyeux que le point de rosée soit atteint, en particulier s'il s'agit de verre nu, à savoir non encore transformé en produit fini. En effet, les gouttelettes de rosée dissolvent certains constituants du verre, ce qui détériore la surface des substrats verriers. Cela rend ensuite très difficile, voire impossible, le dépôt ultérieur de couches sur le verre sur lequel de la rosée s'est déposée.

Le point de rosée peut être atteint pour différents couples de valeurs de température et d'humidité. II est donc important de détecter simultanément les valeurs de température et d'humidité. Ces deux paramètres sont liés pour la détermination du point de rosée. Les mesures de température et d'humidité sont faites durant tout le trajet mais aussi avantageusement lors des opérations de chargement et de déchargement des dispositifs.

Les moyens de traitement, d'enregistrement et de communication 5 sont adaptés à comparer des couples de données de température et d'humidité mesurées par les capteurs de température et d'humidité avec des conditions de température et d'humidité correspondant à la formation du point de rosée. Les conditions de formation du point de rosée sont définies par différents couples de valeurs de température et d'humidité, données par exemple par le diagramme de Mollier, et sont par exemple enregistrées dans une mémoire des moyens de traitement, d'enregistrement et de communication 5.

Le déclenchement d'une alerte est par exemple engendré lorsque le point de rosée est atteint.

De préférence, le déclenchement d'une alerte est engendré lorsque les données de température et d'humidité mesurées sont proches des conditions de température et d'humidité correspondant à la formation du point de rosée.

Le point de rosée est atteint lorsque la valeur d'humidité relative est de 100%, et cela quelle que soit la température. Ainsi, lorsque l'humidité atteint par exemple 95%, l'alerte est déclenchée.

Lorsque l'humidité relative est inférieure à 95%, on considère le couple de données humidité relative/température. Pour une humidité relative donnée, l'alerte est par exemple déclenchée lorsque la valeur de la température est à 3% de la valeur de la formation du point de rosée pour cette valeur d'humidité donnée.

Pour une humidité donnée, le point de rosée peut être atteint par diminution de la température.

On peut donc répondre à cette alerte en déclenchant, depuis la centrale de gestion 6, un système de chauffage à l'intérieur du véhicule afin d'augmenter la température, ce qui fait diminuer l'humidité dans le véhicule, et permet d'éviter la détérioration du panneau verrier.

La centrale 6 peut également ordonner au chauffeur de changer de trajet afin de passer par un trajet où l'air ambiant est moins humide. Le choix d'un nouveau trajet peut se faire par rapport aux prévisions météorologiques.

Le débit d'air peut également être surveillé en fonction de la vitesse du véhicule de transport. On surveille notamment la nécessité ou non de renouveler l'air ambiant au sein du véhicule, de fermer les ouïes d'aération s'il s'avère que l'air extérieur est plus humide que l'air ambiant.

Le débit d'air à l'intérieur du véhicule peut être augmenté afin d'obtenir un effet de soufflerie. En variante, le débit d'ait à l'intérieur du véhicule peut être diminué si l'air extérieur au véhicule est plus humide qu'à l'intérieur. Des moyens d'absorption de l'humidité, tels que des sachets dessiccants, peuvent être disposés dans le véhicule, de préférence dans l'emballage des panneaux verriers.

On peut souhaiter détecter une surcharge en estimant la charge de l'engin de locomotion, telle que celle d'un véhicule routier qui, si elle est supérieure à une valeur seuil, engendrera l'ordre de ne pas démarrer l'engin.

Divers types de mesures et de détection peuvent être réalisées en fonction des besoins liés à la nature de l'engin de locomotion et des dispositifs à transporter.

Les moyens de traitement, d'enregistrement et de communication des informations 5 comporte un émetteur-récepteur de données 51, un module de traitement des données 52, un module d'acquisition de données de localisation 53 du type GPS.

Une source d'alimentation 50 est prévue pour fournir de l'énergie aux moyens de traitement, d'enregistrement et de communication 5 pour leur fonctionnement. Cette source d'alimentation peut être autonome ou non. On peut citer à titre d'exemples, un accumulateur rechargé à l'aide de cellules photovoltaïques disposées sur l'engin de locomotion, ou le générateur de l'engin de locomotion tel que la batterie du véhicule de locomotion.

L'émetteur-récepteur 51 est apte à communiquer avec les capteurs 4, le ou les étiquettes électroniques 3, 30 associées aux dispositifs, l'appareil d'émission-réception compatible 7, et la centrale de gestion des données 6.

La communication avec les capteurs 4 est réalisée par des éléments de liaison 40, du type câble pour signaux électriques ou fibres optiques pour signaux optiques, ou bien par tous moyens de communication sans contact connus tels qu'une liaison par signaux radiofréquences (RFID), une liaison optique du type infrarouge...

La communication avec les capteurs 4 s'établit par requête de l'émetteur-récepteur 51 et/ou par envoi direct de données d'alerte (défauts) depuis les capteurs.

La communication de l'émetteur-récepteur 51 avec les étiquettes électroniques 3, 30 est réalisée sans liaison physique en raison de la mobilité des dispositifs, et est de préférence mise en place par des moyens de communication sans contact du type RFID. La communication s'établit par requête de l'émetteur-récepteur 51.

L'émetteur-récepteur 51 communique enfin avec la centrale de gestion des données 6. La centrale 6 joue un rôle décisionnel dans la logistique, et bien évidemment, elle réagira en temps réel si nécessaire selon le type d'informations communiquées.

Le module de traitement des données 52 consiste en un calculateur qui analyse et gère les informations reçues et émises par l'émetteur-récepteur 51.

Le module de traitement des données 52 comprend avantageusement une mémoire non-volatile, indépendante de l'alimentation dudit module, du type mémoire «Flash », qui permet en cas de rupture de l'alimentation, de sauvegarder toutes les données.

Le module d'acquisition de données de localisation 53 travaille avec le module de traitement de données 52 pour fournir une localisation précise des événements qui sont associés aux informations reçues et émises par l'émetteur-récepteur 51.

Nous expliquons à présent comment est mis en oeuvre le système de suivi de l'invention en donnant des exemples d'opérations et de défauts tracés par ledit système.

Le suivi d'un dispositif 1 portant un autre dispositif 10 dénommé ci-après marchandise, commence par le chargement du dispositif 1 dans l'engin de locomotion 2. Ce chargement est détecté par la communication entre l'étiquette électronique 3 et un capteur de détection de présence 4 qui est agencé sur l'engin 2 et communique avec les moyens de traitement, d'enregistrement et de communication de données 5 qui enregistrent tous dysfonctionnement.

L'étiquette 30 de la marchandise communique par ailleurs avec les moyens de traitement, d'enregistrement et de communication 5 qui vérifient certaines informations préétablies à la commande, notamment si la marchandise telle que le panneau verrier est bien celle à transporter et à livrer.

L'horaire contractuel d'enlèvement peut également être vérifié en étant transmis à la centrale 6. Si une détection de retard à l'enlèvement est effectuée, la centrale pourra en fonction de la distance de livraison, anticiper un retard éventuel à l'arrivée et prévenir de ce retard.

Durant le transport, les capteurs 4 fournissent aux moyens de traitement, d'enregistrement et de communication 5 des données évènementielles qui correspondent aux mesures et aux éventuels défauts détectés. Concomitamment, les moyens de traitement, d'enregistrement et de communication 5 traitent ces données en leur associant une adresse de localisation. Ces données sont transmises à la centrale 6 sur requête ou non, selon le protocole défini.

Si un défaut est détecté, tel qu'un choc violent, la centrale 6 avertie peut réagir en temps réel, et non à posteriori après l'arrivée du véhicule, en commandant à son chauffeur de vérifier l'état de la marchandise et d'aviser alors de la suite à donner au transport. En variante, en cas de chocs dont la valeur est inférieure à une valeur seuil, mais proche de celle-ci, le chauffeur est averti par la centrale 6 afin d'adapter sa conduite pour éviter un choc plus violent qui entraînerait la casse de la marchandise. De même, lorsqu'un choc violent est détecté pendant le transport, il peut être décidé que le chemin utilisé pour ce transport sera désormais banni et qu'un autre trajet devra être emprunté. Le verre peut également être emballé de façon plus sécuritaire pour mieux résister aux chocs. Le calage des panneaux verriers peut également être adapté pour permettre de mieux résister aux chocs.

De même, si des conditions couplées de température et d'humidité proches des conditions de formation du point de rosée sont détectées, la centrale 6 avertie peut réagir en temps réel, par exemple en déclenchant un système de chauffage à l'intérieur du véhicule et/ou en commandant au chauffeur de changer d'itinéraire de façon à s'éloigner des conditions de formation du point de rosée, de façon à éviter l'endommagement de la marchandise, en particulier s'il s'agit d'un substrat verrier comme expliqué plus haut.

A l'arrivée, l'appareil 7 vérifie certaines informations en interrogeant l'étiquette électronique 3. En particulier, la référence et les caractéristiques de la commande sont vérifiées en comparant la commande chargée à celle attendue.

Les moyens de traitement, d'enregistrement et de communication 5 enregistrent le déchargement via le détecteur de présence et informent la centrale 6 de la livraison effectuée.

Par conséquent, l'invention fournit avantageusement un système de suivi qui, en fonctionnement, est entièrement automatisé sans nécessiter une intervention humaine.

Les données qui caractérisent le transport des dispositifs sont simplement enregistrées dans les divers éléments que sont les moyens électroniques de lecture/écriture 3, 30, les mémoires des capteurs 4, les moyens de traitement, d'enregistrement et de communication 5 et la centrale 6. Ensuite, les éléments travaillent ensemble à la manière d'un automate, ce qui conforte la fiabilité du système.

A noter que l'enregistrement des données qui caractérisent le transport, ou leur réinitialisation peut se faire à tout moment durant le transport, avant le départ du site de chargement comme en cours de transport, avec l'avantage dans ce dernier cas de pouvoir retracer le passé écoulé depuis le début du transport.

L'invention a été décrite vis-à-vis du transport de verre mais doit être comprise pour s'appliquer au suivi de tous dispositifs dont les conditions de transport doivent être tracées, y compris des marchandises périssables.

En particulier, l'invention concerne un procédé de suivi de transport de verre à l'aide du système de suivi décrit plus haut, le procédé comprenant :
- le chargement dans un engin de locomotion d'un produit verrier à transporter et/ou d'un support de produit verrier à transporter, le produit verrier et/ou le support de produit verrier et/ou l'engin de locomotion étant muni d'au moins un capteur 4,
- la mesure et/ou la détection de données évènementielles liées aux conditions de transport par le ou les capteurs 4,
- la transmission des données mesurées par le ou les capteurs 4 aux moyens de traitement, d'enregistrement et de communication de données 5,
- la comparaison des données mesurées avec des valeurs seuil mémorisées dans les moyens de traitement, d'enregistrement et de communication de données 5,
- l'émission d'une alerte lorsqu'une valeur seuil est atteinte ou dépassée.

Le procédé permet de suivre en temps réel les conditions de transport et de réagir immédiatement lorsqu'une alerte est déclenchée, ce qui permet, comme cela est expliqué plus haut, de gagner du temps et d'éviter la détérioration des produits verriers, par exemple en évitant la formation de rosée sur du verre nu.

L'invention concerne également un engin de locomotion pour le transport de verre à l'aide d'un système de suivi décrit plus haut, l'engin de locomotion comprenant :
- un produit verrier à transporter et/ou un support de produit verrier à transporter, le produit verrier et/ou le support de produit verrier et/ou l'engin de locomotion étant muni d'au moins un capteur (4) pour la mesure et/ou la détection de données évènementielles liées aux conditions de transport,
- des moyens de traitement, d'enregistrement et de communication de données (5), adaptés à communiquer avec le ou les capteurs (4).

## Revendications

1. Système de suivi d'au moins un dispositif (1, 10) destiné à être transporté, le dispositif destiné à être transporté étant :
- un produit verrier, tel qu'un substrat verrier ;
- un support de produit verrier, tel qu'un agrès de support de verre, ou une interface pour le montage d'un substrat verrier sur un agrès de transport ; et/ou
- un contenant de produit verrier, tel qu'un container ou un caisson apte à être mobile, vide ou chargé,
le système de suivi comprenant :
- des moyens de traitement, d'enregistrement et de communication de données (5), qui comportent un émetteur-récepteur de données (51), un module de traitement et d'enregistrement des données (52) et un module d'acquisition de données de localisation (53),
- des moyens électroniques de lecture/écriture (3, 30) qui sont destinés à être associés au dispositif (1, 10) et qui sont aptes à communiquer avec les moyens de traitement, d'enregistrement et de communication (5),
- au moins un capteur (4) pour la mesure et/ou la détection de données évènementielles liées aux conditions de transport,
le ou les capteurs (4) étant aptes à communiquer les données évènementielles aux moyens de traitement, d'enregistrement et de communication (5), et éventuellement aux moyens électroniques de lecture/écriture (3), et la transmission des données évènementielles aux moyens de traitement, d'enregistrement et de communication (5) étant associée à une adresse de localisation de l'événement grâce au module de localisation (53).

2. Système de suivi selon la revendication 1, comportant en outre une centrale de gestion des données (6) qui est éloignée physiquement des moyens de traitement, d'enregistrement et de communication de données (5), et qui communique avec ceux-ci par des moyens de télécommunication, certaines données de la centrale (6) pouvant être accessibles par Internet.

3. Système de suivi selon la revendication 1 ou 2, dans lequel les moyens de traitement, d'enregistrement et de communication de données (5) sont associés à l'engin de locomotion (2) destiné à transporter le dispositif, ou sont associés au dispositif lui-même.

4. Système de suivi selon l'une quelconque des revendications précédentes, **caractérisé en ce que** un ou plusieurs capteurs (4) sont associés au dispositif (1, 10) à transporter et/ou à l'engin de locomotion (2) destiné à transporter ledit dispositif.

5. Système de suivi selon l'une quelconque des revendications précédentes, dans lequel des capteurs (4) sont un capteur de température et un capteur d'humidité, les moyens de traitement, d'enregistrement et de communication (5) étant adaptés à comparer les couples de données de température et d'humidité mesurées par les capteurs (4) de température et d'humidité avec des conditions de température et d'humidité correspondant à la formation du point de rosée et à émettre une alerte lorsque les données de température et d'humidité mesurées sont proches des conditions de température et d'humidité correspondant à la formation du point de rosée.

6. Système de suivi selon l'une quelconque des revendications précédentes, dans lequel un des capteurs (4) est un capteur de chocs, les moyens de traitement, d'enregistrement et de communication (5) étant adaptés à comparer les données de chocs mesurées par le capteur (4) de chocs avec une valeur prédéterminée correspondant à la casse du dispositif (1) ou du produit (10) transporté sur le dispositif (1) et à émettre une alerte lorsque les données mesurées par le capteur de chocs sont proches de la valeur prédéterminée.

7. Système de suivi selon l'une quelconque des revendications précédentes, dans lequel le ou les capteurs (4) sont adaptés à communiquer des données évènementielles aux moyens de traitement, d'enregistrement et de communication (5) sur requête desdits moyens ou à générer ces données lors de la détection de défauts.

8. Système de suivi selon l'une quelconque des revendications précédentes, dans lequel le ou les capteurs (4) disposent d'une mémoire interne pour enregistrer les données évènementielles.

9. Système de suivi selon l'une quelconque des revendications précédentes, dans lequel les moyens de traitement, d'enregistrement et de communication (5) nécessitant une alimentation électrique sont alimentés par une source d'alimentation électrique autonome ou non.

10. Système de suivi selon la revendication 10, dans lequel la source d'alimentation électrique fonctionne à partir de tous types de générateurs associés à l'engin de locomotion (2), notamment un générateur électrique tel qu'une pile, une batterie de véhicule routier, un générateur éolien, électromagnétique, thermique, solaire tel que des cellules photovoltaïques.

11. Système de suivi selon l'une quelconque des revendications précédentes, dans lequel les moyens de traitement, d'enregistrement et de communication (5) comportent une mémoire non volatile pour la sauvegarde des données.

12. Système de suivi selon l'une quelconque des revendications précédentes, dans lequel la communication entre les différents éléments du système que sont les capteurs (4), les moyens électroniques de lecture/écriture (3, 30), les moyens de traitement, d'enregistrement et de communication (5), est réalisée par tous moyens de communication adaptés, de préférence par radiofréquences.

13. Système de suivi selon l'une quelconque des revendications précédentes, dans lequel les moyens électroniques de lecture/écriture (3, 30) ont en mémoire les données évènementielles des conditions de transport, et/ou des données qui caractérisent le dispositif et/ou la commande de livraison dudit dispositif.

14. Système de suivi selon l'une quelconque des revendications précédentes, appliqué à une pluralité de dispositifs (1, 10), chaque dispositif pouvant comprendre des moyens électroniques de lecture/écriture (3, 30).

15. Système de suivi selon l'une quelconque des revendications précédentes, associé à un engin de locomotion (2) selon un mode routier, ferroviaire, maritime, fluvial, aérien ou une combinaison d'au moins deux de ces modes.

16. Utilisation pour le transport du verre d'un système de suivi basé sur la localisation par satellites ou radiofréquences, dans laquelle des capteurs (4) du système de suivi sont aptes à générer des données évènementielles qui sont liées aux conditions de transport et qui sont localisées par ledit système de suivi.

17. Procédé de suivi de transport de verre à l'aide du système de suivi selon l'une quelconque des revendications 1 à 15, comprenant :
- le chargement dans un engin de locomotion d'un produit verrier à transporter et/ou d'un support de produit verrier à transporter, le produit verrier et/ou le support de produit verrier et/ou l'engin de locomotion étant muni d'au moins un capteur (4),
- la mesure et/ou la détection de données évènementielles liées aux conditions de transport par le ou les capteurs (4),
- la transmission des données mesurées par le ou les capteurs (4) aux moyens de traitement, d'enregistrement et de communication de données (5),
- la comparaison des données mesurées avec des valeurs seuil mémorisées dans les moyens de traitement, d'enregistrement et de communication de données (5),
- l'émission d'une alerte lorsqu'une valeur seuil est atteinte ou dépassée.

18. Engin de locomotion pour le transport de verre à l'aide d'un système de suivi selon l'une quelconque des revendications 1 à 15, comprenant :
- un produit verrier à transporter et/ou un support de produit verrier à transporter, le produit verrier et/ou le support de produit verrier et/ou l'engin de locomotion étant muni d'au moins un capteur (4) pour la mesure et/ou la détection de données évènementielles liées aux conditions de transport,
- des moyens de traitement, d'enregistrement et de communication de données (5), adaptés à communiquer avec le ou les capteurs (4).
